# EUROPÄISCHE PATENTSCHRIFT

(11) **EP 0 854 808 B1**
(45) Veröffentlichungstag und Bekanntmachung des Hinweises auf die Patenterteilung: **03.04.2002**
(21) Anmeldenummer: 96934580.0
(22) Anmeldetag: 09.10.1996
(51) Int. Cl.: B60T 13/66

(54) **ELEKTRONISCH REGELBARES BREMSBETÄTIGUNGSSYSTEM**
ELECTRONICALLY CONTROLLABLE BRAKE OPERATING SYSTEM
SYSTEME D'ACTIONNEMENT DE FREINS A REGULATION ELECTRONIQUE

(30) Priorität: 12.10.1995 DE 19537962
(43) Veröffentlichungstag der Anmeldung: 29.07.1998
(73) Patentinhaber: Continental Teves AG & Co. oHG, 60488 Frankfurt (DE)
(72) Erfinder: WÖRSDÖRFER, Karl-Fr., D-55257 Budenheim (DE)
(86) Internationale Anmeldenummer: EP9604366
(87) Internationale Veröffentlichungsnummer: WO9713672

(56) Entgegenhaltungen:
- EP-A- 0 420 484
- DE-A- 3 124 755
- DE-A- 3 131 856
- DE-A- 3 526 556
- DE-A- 3 926 244

## Beschreibung

Die Erfindung betrifft ein elektronisch regelbares Bremsbetätigungssystem nach dem Oberbegriff des Patentanspruchs 1.

Ein derartiges Bremsbetätigungssystem ist zum Beispiel aus der DE-0S 3124755A1 bekannt. Die Druckquelle des vorbekannten Bremsbetätigungssystems besteht aus einer Pumpe, einem hydraulischen Speicher sowie einem Druckmittelvorratsbehälter, wobei die Funktion der Trenn-, sowie der Einlaß- und Auslaßventile von Mehrstellungs- bzw. 4/4-Wegeventilen erfüllt wird, deren Eingangsanschlüsse mit der Druckseite der Pumpe bzw. dem Speicher, dem Druckmittelvorratsbehälter sowie je einem Druckraum des zweikreisigen Hauptbremszylinders verbunden sind, während an die Ausgangsanschlüsse die Radbremsen angeschlossen sind. Bei einer Fremdbremsung bzw. einem Druckaufbau wird das 4/4-Wegeventil in seine erste Schaltstellung umgeschaltet, in der die Radbremsen vom Hauptbremszylinder getrennt und mit der Druckquelle verbunden sind. Eine Druckhaltephase wird in einer zweiten Schaltstellung realisiert, in der die Radbremsen sowohl vom Hauptbremszylinder als auch der Druckquelle getrennt sind, während ein Druckabbau in einer dritten Schaltstellung erfolgt, in der eine Verbindung zwischen den Radbremsen und dem drucklosen Druckmittelvorratsbehälter hergestellt wird.

Abgesehen von mit dem Einsatz der aufwendigen Druckquelle verbundenen, verhältnismäßig hohen Kosten ist bei dem vorbekannten Bremsbetätigungssystem die ungünstige Bremsdruckdosierbarkeit, insbesondere im Bereich niedrigerer Drücke, anzusehen, die auf die Verwendung des 4/4-Wegeventils zurückzuführen ist.

Es ist daher Aufgabe der vorliegenden Erfindung, ein elektronisch regelbares Bremsbetätigungssystem der eingangs genannten Gattung dahingehend zu verbessern, daß insbesondere die bei einer ABS-Regelung genannten Nachteile weitgehendst vermieden werden. Insbesondere soll eine erhebliche Verbesserung der Bremsdruckdosierbarkeit im unteren Druckbereich bei gleichzeitiger Senkung des Gesamtaufwandes erreicht werden.

Diese Aufgabe wird erfindungsgemäß dadurch gelöst, daß die Druckquelle als mindestens eine kontinuierlich verstellbare Kolben-Zylinder-Einheit ausgebildet ist, an deren Druckraum die Radbremsen unter Zwischenschaltung der Einlaßventile angeschlossen sind. Durch diese Maßnahmen wird erreicht, daß Normalbremsvorgänge analog mittels der Kolben-Zylinder-Einheit durchgeführt werden, während eine Erhöhung der Bremsdruckabbaugeschwindigkeit durch Schalten der Trennventile erreicht werden kann.

Vorteilhafte Weiterbildungen des erfindungsgemäßen Bremsbetätigungssystems sind den Unteransprüchen 2 bis 12 entnehmbar.

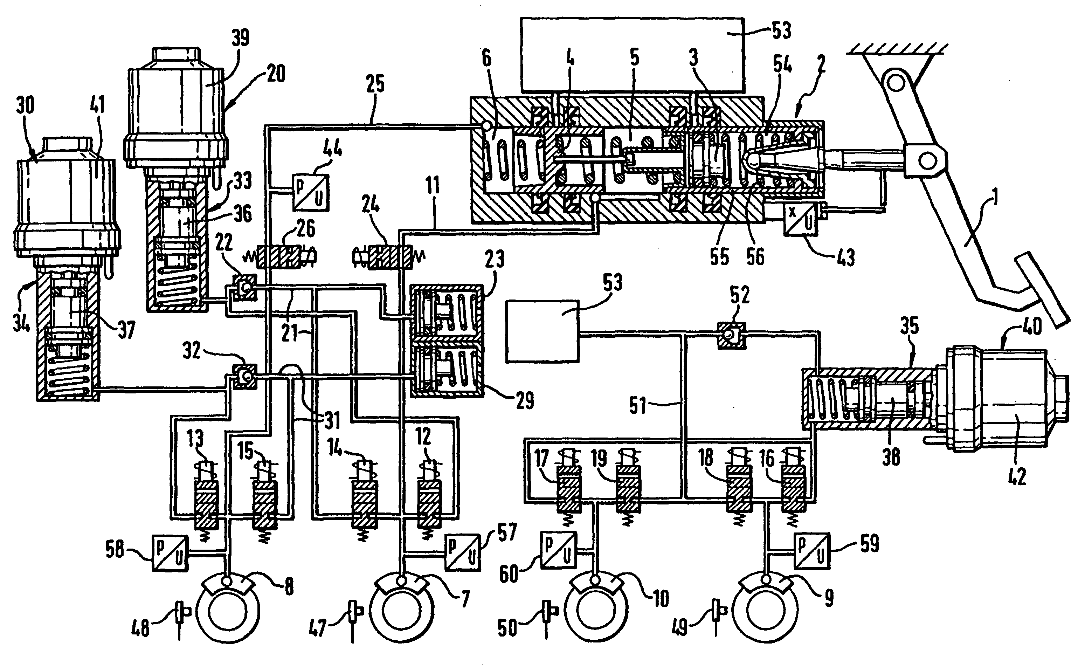

Die Erfindung wird in der nachfolgenden Beschreibung an einem Ausführungsbeispiel unter Bezugnahme auf die beiliegende Zeichnung näher erläutert. Die einzige Figur zeigt ein vereinfachtes Schaltbild des erfindungsgemäßen Bremsbetätigungssystems.

Das in der Zeichnung dargestellte, elektronisch regelbare Bremsbetätigungssystem nach der Erfindung ist für ein Fahrzeug mit Vorderradantrieb vorgesehen. Es besteht aus einem mittels eines Betätigungspedals 1 betätigbaren, zweikreisigen Hauptbremszylinder bzw. Tandemhauptzylinder 2, der durch zwei Kolben 3,4 begrenzte, voneinander getrennte Druckräume 5,6 aufweist, die mit einem drucklosen Druckmittelvorratsbehälter 53 in Verbindung stehen. Der erste Druckraum (Primärdruckraum) 5 steht mittels einer absperrbaren ersten hydraulischen Leitung 11 in Verbindung mit einer der angetriebenen Vorderachse des Fahrzeuges zugeordneten hydraulischen Radbremse 7, die andererseits über ein elektromagnetisch betätigbares, vorzugsweise stromlos geschlossenes (SG) erstes Einlaßventil 12 mit einer ersten einkreisigen Kolben-Zylinder-Einheit 20 verbunden ist. An einem zweiten Leitungsabschnitt 21 zwischen der ersten Kolben-Zylinder-Einheit 20 und der Radbremse 7, in dem ein zur Kolben-Zylinder-Einheit 20 öffnendes erstes Rückschlagventil 22 sowie ein elektromagnetisch betätigbares, stromlos geschlossenes (SG) erstes Auslaßventil 14 eingefügt sind, ist ein erster Niederdruckspeicher 23 angeschlossen. Das Absperren der hydraulischen Leitung 11 erfolgt mittels eines elektromagnetisch betätigbaren ersten Trennventils 24, das vorzugsweise als ein stromlos offenes (SO) 2/2-Wegeventil ausgeführt ist.

Der zweite Druckraum (Sekundärdruckraum) 6 des Hauptbremszylinders 2 steht über eine mittels eines zweiten Trennventils 26 absperrbare zweite hydraulische Leitung 25 in Verbindung mit der anderen, der Vorderachse zugeordneten Radbremse 8, die andererseits über ein elektromagnetisch betätigbares, vorzugsweise stromlos geschlossenes (SG) zweites Einlaßventil 13 mit einer zweiten einkreisigen Kolben-Zylinder-Einheit 30 verbunden ist. An einen zweiten Leitungsabschnitt 31 zwischen der zweiten Kolben-Zylinder-Einheit 30 und der Radbremse 8, in dem ein zur Kolben-Zylinder-Einheit 30 öffnendes zweites Rückschlagventil 32 sowie ein elektromagnetisch betätigbares, stromlos geschlossenes (SG) zweites Auslaßventil 15 eingefügt sind, ist ein zweiter Niederdruckspeicher 33 angeschlossen. Das vorhin erwähnte zweite Trennventil 26 ist als elektromagnetisch betätigbares, stromlos offenes (SO) 2/2-Wegeventil ausgeführt.

An eine dritte Kolben-Zylinder-Einheit 40 sind über weitere Ein- und Auslaßventile 16,17,18,19 beide der nicht angetriebenen Hinterachse zugeordneten hydraulischen Radbremsen 9,10 angeschlossen. Dem Abbau des in den Radbremsen 9,10 eingesteuerten hydraulischen Druckes dient ein Leitungsabschnitt 51, an den die Auslaßventile 18,19 angeschlossen sind und der einerseits über ein drittes Rückschlagventil 52 mit der dritten Kolben-Zylinder-Einheit 40 und andererseits mit einem drucklosen Druckmittelvorratsbehälter, beispielsweise mit dem vorhin erwähnten Druckmittelvorratsbehälter 53, in Verbindung steht. Alle drei Kolben-Zylinder-Einheiten 20,30,40 sind von ihrem Aufbau her gleich und bestehen aus je einem Hydraulikzylinder 33,34,35, in dem je ein Kolben 36,37,38 verschiebbar geführt ist, der durch je einen vorzugsweise reversierbaren Gleichstrommotor 39,41,42 antreibbar ist. Der gemeinsamen Ansteuerung der Gleichstrommotoren 39,41,42 sowie der Elektromagnetventile dient eine nicht gezeigte elektronische Steuereinheit, der als Eingangssignale die Ausgangssignale eines mit dem Betätigungspedal 1 zusammenwirkenden Betätigungswegsensors 43 sowie eines den im zweiten Druckraum 6 des Hauptbremszylinders 2 herrschenden hydraulischen Druck erfassenden Drucksensors 44 zugeführt werden und die eine Fahrerverzögerungswunscherkennung ermöglichen. zur Fahrerverzögerungswunscherkennung können jedoch auch andere Mittel, beispielsweise ein die Betätigungskraft am Betätigungspedal 1 sensierender Kraftsensor verwendet werden. Als weitere Eingangsgrößen werden der elektronischen Steuereinheit die der Fahrzeuggeschwindigkeit entsprechenden Ausgangssignale von den einzelnen Rädern zugeordneten Radsensoren 47,48,49,50 sowie die Ausgangssignale von Drucksensoren 57,58,59,60, zugeführt, die die Druckwerte der einzelnen Radbremsen 7 bis 10 erfassen.

Wie der Zeichnung schließlich zu entnehmen ist, ist wirkungsmäßig zwischen dem Betätigungspedal 1 und dem Hauptbremszylinder 2 ein Simulator 54 angeordnet, der durch eine mit dem Betätigungspedal 1 in kraftübertragender Verbindung stehende, einen Bestandteil des ersten Hauptzylinderkolbens 3 bildende Hülse 55 sowie eine innerhalb der Hülse 55 angeordnete Simulatorfeder 56 gebildet ist. Die Simulatorfeder 56 stützt sich dabei einerseits am Kolben 3 und andererseits an der Hülse 55 axial ab.

Das in der Zeichnung dargestellte Bremsbetätigungssystem nach der Erfindung funktioniert wie folgt:
Wird ein Bremsvorgang durch Niederdrücken des Bremsbetätigungspedals 1 eingeleitet, so wird der Betätigungszustand vom Betätigungswegsensor 43 erkannt und der elektronischen Steuereinheit mitgeteilt, deren Steuersignale ein Umschalten der Trennventile 24 und 26 sowie der Einlaßventile 12,13,16,17 und dadurch eine Trennung der Hauptzylinderdruckräume 5,6 von den Radbremsen 7,5 bzw. eine Freigabe der Verbindungen zwischen den Radbremsen 7 bis 10 und den zugeordneten Kolben-ZylinderEinheiten 20,30 und 40 bewirken. Durch den Drucksensor 44 erfolgt eine zweite Meldung des Fahrerverzögerungswunsches an die elektronische Steuereinheit, die mit der darin installierten Bremskraftverteilung die gewünschten Bremsmomente an den Fahrzeugachsen errechnet. Die den errechneten Bremsmomenten entsprechenden Steuersignale werden in Gleichstrommotoren 39,41,42 den Kolben-Zylinder-Einheiten 20,30,40 zugeführt, die ein Verschieben deren Kolben 36,37,38 in Betätigungsrichtung und somit eine Druckerhöhung in den Radbremsen 7 bis 10 einleiten. Das für den Fahrer gewöhnliche, bei einem Bremsvorgang spürbare Pedalgefühl wird durch Zusammendrücken der Simulatorfeder 56 gewährleistet.

Ein Druckabbau erfolgt durch Zurückfahren der Kolben 36,37,38, unter Umständen durch aktive Drehrichtungsumkehr der Gleichstrommotoren 39,41,42. Durch die letztgenannte Maßnahme wird eine Erhöhung der Dynamik des Bremsvorgangs erreicht. Eine Druckhaltephase wird realisiert, indem die Einlaßventile 12,13,16,17 in ihre Sperrstellung umgeschaltet werden.

In einem ABS-Regelfall kann eine einfache Druckmodulation (bei kleinen Druckgradienten) mittels der Kolben-Zylinder-Einheiten wie bei der Normalbremsfunktion durchgeführt werden. Eine schnelle Druckmodulation an dem zu regelnden Rad erfolgt über die Ein-(12,13,16,17) und Auslaßventile (14,15,18,19), wobei die Niederdruckspeicher 23,33 über die Rückschlagventile 22,32 von den zurücklaufenden Kolben-Zylinder-Einheiten 20,30 entleert werden bzw. die dritte Kolben-Zylinder-Einheit 40 das aus den Radbremsen 9,10 in den Druckmittelvorratsbehälter 53 abgelassene Druckmittelvolumen wieder aufnimmt.

Eine ABS-Regelung wird demnach dreikanalig (Vorderachse - zweikanalig, Hinterachse - einkanalig) im Regelmodus mit den Raddrehzahlsensoren 47,48,49,50 durchgeführt, wobei die Bremsdruckmodulation an der Hinterachse beispielsweise nach dem "Select-low"-Prinzip erfolgt.

Bei einem Ausfall der Elektronik/Fahrzeugelektrik gehen alle Ventile in den stromlosen Zustand. Dabei werden beide der Vorderachse zugeordneten Radbremsen 7,8 über die stromlos offenen Ventile 24,26 mit dem Tandemhauptzylinder 2 verbunden, so daß die gesetzlich geforderten Bestimmungen bei Ausfall der Elektronik erfüllt werden.

Bei einem hydraulischen Ausfall der der Vorderachse zugeordneten Bremskreise kann immer mit dem der Hinterachse zugeordneten Kreis die gesetzlich geforderte Bremswirkung "brake-by-wire" erreicht werden. Bei Ausfall des der Hinterachse zugeordneten hydraulischen Kreises ist durch die Verwendung des Betätigungswegsensors 43 bzw. des Drucksensors 44 sichergestellt, daß über die angetriebene Vorderachse die Bremswirkung "brake-by-wire" erreicht wird.

## Patentansprüche

1. Elektronisch regelbares Bremsbetätigungssystem für Kraftfahrzeuge, mit einem Hauptbremszylinder (2), mit einem mit dem Hauptbremszylinder zusammenwirkenden Simulator (54), mit einer durch eine elektronische Steuereinheit ansteuerbaren Druckquelle, mit deren Druck Radbremsen (7-10) des Fahrzeuges beaufschlagbar sind, die über mindestens eine mittels eines Trennventils (24,26) absperrbare hydraulische Verbindung mit dem Hauptbremszylinder (2) verbindbar sind, mit einer Einrichtung zur Erkennung des Fahrerverzögerungswunsches (43,44), mit je einem den Radbremsen vor- bzw. nachgeschalteten Ein- und Auslaßventil (12-19), sowie mit das Drehverhalten der Fahrzeugräder erfassenden Radsensoren (47-50), **dadurch gekennzeichnet, daß** die Druckquelle als mindestens eine kontinuierlich verstellbare Kolben-Zylinder-Einheit (20,30,40) ausgebildet ist, an deren Druckraum die Radbremsen (7,8,9,10) unter Zwischenschaltung der Einlaßventile (12,13,16,17) angeschlossen sind.

2. Elektronisch regelbares Bremsbetätigungssystem nach Anspruch 1, **dadurch gekennzeichnet, daß** der Druckraum der Kolben-Zylinder-Einheit (20,30,) über ein zum Druckraum hin öffnendes Rückschlagventil (22,32) mit einem Niederdruckspeicher (23,33) in Verbindung steht, mit dem die Radbremse (7,8) mittels des Auslaßventils (14,15) verbindbar ist.

3. Elektronisch regelbares Bremsbetätigungssystem nach Anspruch 1 oder 2, **dadurch gekennzeichnet, daß** sowohl das Ein- (12,13,16,17) als auch das Auslaßventil (14,15,18,19) als elektromagnetisch betätigbare, stromlos geschlossene (SG) 2/2-Wegeventile ausgebildet sind.

4. Elektronisch regelbares Bremsbetätigungssystem nach einem der Ansprüche 1, 2 oder 3, **dadurch gekennzeichnet, daß** die Radbremsen (7,8) einer angetriebenen Fahrzeugachse mit je einem Druckraum (5,6) des Hauptbremszylinders (2) sowie mit je einer einkreisigen Kolben-Zylinder-Einheit (20,30) verbunden sind, während die einer nicht angetriebenen Fahrzeugachse zugeordneten Radbremsen (9,10) lediglich an eine Kolben-Zylinder-Einheit (40) angeschlossen sind.

5. Elektronisch regelbares Bremsbetätigungssystem nach einem der Ansprüche 1,2 oder 3, **dadurch gekennzeichnet, daß** die Kolben-Zylinder-Einheit zweikreisig ausgeführt ist, wobei an den ersten Druckraum eine einer ersten Fahrzeugachse zugeordnete Radbremse sowie eine einer zweiten Fahrzeugachse zugeordnete Radbremse und an den zweiten Druckraum die andere der ersten und der zweiten Fahrzeugachse zugeordnete Radbremse angeschlossen sind.

6. Elektronisch regelbares Bremsbetätigungssystem nach einem der Ansprüche 1,2 oder 3, **dadurch gekennzeichnet, daß** die Druckquelle durch zwei einkreisige Kolben-Zylinder-Einheiten gebildet ist, wobei an den Druckraum der ersten Kolben-Zylinder-Einheit eine einer ersten Fahrzeugachse zugeordnete Radbremse sowie eine einer zweiten Fahrzeugachse zugeordnete Radbremse und an den Druckraum der zweiten Kolben-Zylinder-Einheit die andere der ersten und der zweiten Fahrzeugachse zugeordnete Radbremse angeschlossen sind.

7. Elektronisch regelbares Bremsbetätigungssystem nach einem der Ansprüche 1,2 oder 3, **dadurch gekennzeichnet, daß** die Kolben-Zylinder-Einheit zweikreisig ausgeführt ist, wobei an den ersten Druckraum die einer Fahrzeugachse zugeordneten Radbremsen und an den zweiten Druckraum die der anderen Fahrzeugachse zugeordneten Radbremsen angeschlossen sind.

8. Elektronisch regelbares Bremsbetätigungssystem nach einem der Ansprüche 1 bis 7, **dadurch gekennzeichnet, daß** die Kolben-Zylinder-Einheit (20,30,40) durch einen Hydraulikzylinder (33,34,35) gebildet ist, dessen Kolben (36,37,38) mittels eines reversierbaren Gleichstrommotors (39,41,42) betätigbar ist.

9. Elektronisch regelbares Bremsbetätigungssystem nach einem der Ansprüche 1 bis 7, **dadurch gekennzeichnet, daß** die Kolben-Zylinder-Einheit durch einen Hydraulikzylin der gebildet ist, dessen Kolben mittels eines ventilgesteuerten, pneumatisch bzw. hydraulisch ansteuerbaren Linearantriebs betätigbar ist.

10. Elektronisch regelbares Bremsbetätigungssystem nach einem der Ansprüche 1 bis 9, wobei der Hauptbremszylinder mittels eines Betätigungspedals betätigbar ist, **dadurch gekennzeichnet, daß** die Einrichtung zur Erkennung des Fahrerverzögerungswunsches durch die Kombination eines den Betätigungsweg des Betätigungspedals erfassenden Wegsensors (43) mit einem den im Hauptbremszylinder (2) entstehenden hydraulischen Druck erfassenden Drucksensor (44) gebildet ist.

11. Elektronisch regelbares Bremsbetätigungssystem nach einem der Ansprüche 1 bis 10, **dadurch gekennzeichnet, daß** der Simulator (54) durch eine wirkungsmäßig zwischen dem Betätigungspedal (1) und dem Hauptbremszylinder (2) angeordnete Druckfeder (56) gebildet ist.

## Claims

1. Electronically controllable brake actuation system for automotive vehicles which includes a master brake cylinder (2), a simulator (54) interacting with the master brake cylinder, a pressure source actuatable by an electronic control unit and by which the wheel brakes (7 - 10) of the vehicle are pressurizable, the wheel brakes being connectable to the master brake cylinder (2) by at least one hydraulic connection that is closable by a separating valve (24, 26), a device for the identification of the driver's wish for deceleration (43, 44), each one inlet and outlet valve (12 - 19) connected upstream or downstream, respectively, of the wheel brakes, and wheel sensors (47 - 50) sensing the rotational behavior of the vehicle wheels,
**characterized in that** the pressure source is configured as at least one continuously adjustable piston-and-cylinder assembly (20, 30, 40) having a pressure chamber to which the wheel brakes (7, 8, 9, 10) are connected by the intermediary of the inlet valves (12, 13, 16, 17).

2. Electronically controllable brake actuation system as claimed in claim 1,
**characterized in that** the pressure chamber of the piston-and-cylinder assembly (20, 30) is connected to a low-pressure accumulator (23, 33) by way of a non-return valve (22, 32) which opens towards the pressure chamber, the wheel brake (7, 8) being connectable to the accumulator (23, 33) by way of the outlet valve (14, 15).

3. Electronically controllable brake actuation system as claimed in claim 1 or claim 2,
**characterized in that** both the inlet valve (12, 13, 16, 17) and the outlet valve (14, 15, 18, 19) are configured as electromagnetically operable, normally closed (NC) two-way/two-position directional control valves.

4. Electronically controllable brake actuation system as claimed in any one of claims 1, 2 or 3,
**characterized in that** the wheel brakes (7, 8) of a driven vehicle axle are connected to each one pressure chamber (5, 6) of the master brake cylinder (2) and each one one-circuit piston-and-cylinder assembly (20, 30), and the wheel brakes (9, 10) associated with a non-driven vehicle axle are connected only to a piston-and-cylinder assembly (40).

5. Electronically controllable brake actuation system as claimed in any one of claims 1, 2 or 3,
**characterized in that** the piston-and-cylinder assembly has a dual-circuit design, wherein a wheel brake associated with a first vehicle axle and a wheel brake associated with a second vehicle axle are connected to the first pressure chamber, and the other wheel brake associated with the first and the second vehicle axle is connected to the second pressure chamber.

6. Electronically controllable brake actuation system as claimed in any one of claims 1, 2 or 3,
**characterized in that** the pressure source is provided by two one-circuit piston-and-cylinder assemblies, wherein a wheel brake associated with a first vehicle axle and a wheel brake associated with a second vehicle axle are connected to the pressure chamber of the first piston-and-cylinder assembly, and the other wheel brake associated with the first and the second vehicle axle is connected to the pressure chamber of the second piston-and-cylinder assembly.

7. Electronically controllable brake actuation system as claimed in any one of claims 1, 2 or 3,
**characterized in that** the piston-and-cylinder assembly has a dual-circuit design, wherein the wheel brakes associated with one vehicle axle are connected to the first pressure chamber and the wheel brakes associated with the other vehicle axle are connected to the second pressure chamber.

8. Electronically controllable brake actuation system as claimed in any one of claims 1 to 7,
**characterized in that** the piston-and-cylinder assembly (20, 30, 40) is provided by a hydraulic cylinder (33, 34, 35) having a piston (36, 37, 38) which is operable by a reversible direct-current motor (39, 41, 42).

9. Electronically controllable brake actuation system as claimed in any one of claims 1 to 7,
**characterized in that** the piston-and-cylinder assembly is provided by a hydraulic cylinder having a piston which is operable by a valve-controlled, pneumatically or hydraulically actuatable linear drive.

10. Electronically controllable brake actuation system as claimed in any one of claims 1 to 9, wherein the master brake cylinder is operable by an actuating pedal,
**characterized in that** the device for identifying the driver's wish for deceleration is provided by the combination of a travel sensor (43), which senses the actuating travel of the actuating pedal, and a pressure sensor (44) which senses the hydraulic pressure that develops in the master brake cylinder (2).

11. Electronically controllable brake actuation system as claimed in any one of claims 1 to 10,
**characterized in that** the simulator (54) is provided by a compression spring (56) which is arranged in terms of effect between the actuating pedal (1) and the master brake cylinder (2).

## Revendications

1. Système d'actionnement de frein à régulation électronique pour véhicules automobiles, comportant un cylindre de frein principal (2) ; comportant un simulateur (54) coopérant avec le cylindre de frein principal ; une source de pression qui peut être commandée par une unité de commande électronique et dont la pression peut agir sur des freins de roue (7-10) du véhicule, lesquels peuvent être reliées au cylindre de frein principal (2) par au moins une liaison hydraulique qui peut être fermée au moyen d'une soupape de séparation (24, 26) ; un dispositif de détection (43, 44) du souhait du conducteur de ralentir ; des soupapes d'admission et d'échappement (12-19) montées respectivement devant et derrière chacun des freins de roue ; et des capteurs de roue (47-50) détectant le comportement en rotation des roues du véhicule, **caractérisé en ce que** la source de pression est réalisée sous la forme d'au moins une unité à cylindre et piston (20, 30, 40) réglable en continu, à la chambre de pression de laquelle sont raccordés les freins de roue (7, 8, 9, 10), avec interposition des soupapes d'admission (12, 13, 16, 17).

2. Système d'actionnement de frein à régulation électronique selon la revendication 1, **caractérisé en ce que** la chambre de pression de l'unité à cylindre et piston (20, 30) est en liaison, par un clapet de non-retour (22, 32) s'ouvrant vers la chambre de pression, avec un accumulateur basse pression (23, 33) auquel le frein de roue (7, 8) peut être relié, au moyen de la soupape d'échappement (14, 15).

3. Système d'actionnement de frein à régulation électronique selon la revendication 1 ou 2, **caractérisé en ce que** la soupape d'admission (12, 13, 16, 17) comme la soupape d'échappement (14, 15, 18, 19) sont réalisées en tant que soupapes de distribution à 2/2 voies à actionnement électromagnétique, qui sont fermées lorsqu'elles ne sont pas parcourues par un courant.

4. Système d'actionnement de frein à régulation électronique selon l'une des revendications 1, 2 ou 3, **caractérisé en ce que** les freins de roue (7, 8) d'un essieu moteur du véhicule sont reliés chacun à une chambre de pression (5, 6) respective du cylindre de frein principal (2), ainsi qu'à une unité à cylindre et piston (20, 30) à un circuit, tandis que les freins de roue (9, 10), associés à un essieu non- moteur du véhicule, sont raccordés uniquement à une unité à cylindre et piston (40).

5. Système d'actionnement de frein à régulation électronique selon l'une des revendications 1, 2 ou 3, **caractérisé en ce que** l'unité à cylindre et piston comporte deux circuits, à la première chambre de pression étant raccordés un frein de roue, associé à un premier essieu du véhicule, ainsi qu'un frein de roue associé à un deuxième essieu du véhicule, et, à la deuxième chambre de pression étant raccordé l'autre frein de roue associé aux premier et deuxième essieux du véhicule.

6. Système d'actionnement de frein à régulation électronique selon l'une des revendications 1, 2 ou 3, **caractérisé en ce que** la source de pression est constituée par deux unités à cylindre et piston à un circuit, à la chambre de pression de la première unité à cylindre et piston étant raccordés un frein de roue associé à un premier essieu du véhicule, ainsi qu'un frein de roue associé à un deuxième essieu du véhicule, et, à la chambre de pression de la deuxième unité à cylindre et piston étant raccordé l'autre frein de roue associé aux premier et deuxième essieux du véhicule.

7. Système d'actionnement de frein à régulation électronique selon l'une des revendications 1, 2 ou 3, **caractérisé en ce que** l'unité à cylindre et piston comporte deux circuits, à la première chambre de pression étant raccordés les freins de roue associés à un essieu du véhicule, et, à la deuxième chambre de pression étant raccordés les freins de roue associés à l'autre essieu du véhicule.

8. Système d'actionnement de frein à régulation électronique selon l'une des revendications 1 à 7, **caractérisé en ce qu'**une unité à cylindre et piston (20, 30, 40) est formée par un cylindre hydraulique (33, 34, 35) dont le piston (36, 37, 38) peut être actionné au moyen d'un moteur à courant continu réversible (39, 41, 42).

9. Système d'actionnement de frein à régulation électronique selon l'une des revendications 1 à 7, **caractérisé en ce que** l'unité à cylindre et piston est formée par un cylindre hydraulique dont le piston peut être actionné au moyen d'un dispositif d'entraînement linéaire commandé par soupape, qui peut être pneumatique ou hydraulique.

10. Système d'actionnement de frein à régulation électronique selon l'une des revendications 1 à 9, dans lequel le cylindre de frein principal peut être actionné au moyen d'une pédale d'actionnement, **caractérisé en ce que** le dispositif de détection du souhait du conducteur de ralentir est constitué par la combinaison d'un capteur de course (43) détectant la course d'actionnement de la pédale d'actionnement, et d'un capteur de pression (44) détectanr la pression hydraulique qui s'établt dans le cylindre de frein principal (2).

11. Système d'actionnement de frein à régulation électronique selon l'une des revendications 1 à 10, **caractérisé en ce que** le simulateur (54) est constitué par un ressort de compression (56) disposé de manière à agir entre la pédale d'actionnement (1) et le cylindre de frein principal (2).
